# EUROPEAN PATENT APPLICATION

(11) **EP 2 492 843 A1**
(43) Date of publication of application: **29.08.2012**
(21) Application number: 11305178.3
(22) Date of filing: 22.02.2011
(51) Int. Cl.: G06K 9/32, G06T 5/00, G06T 11/60

(54) **Graphic user interface for adaption of parameters for an automatic logo removal algorithm and method for adaption of these parameters**

(71) Applicant: Thomson Licensing, 92130 Issy-les-Moulineaux (FR)
(72) Inventor: Fradet, Matthieu, 92443, Issy les Moulineaux Cedex (FR); Newson, Alasdair, 92443, Issy les Moulineaux Cedex (FR); Robert, Philippe, 35235, Thorigne-Fouillard (FR)
(74) Representative: Thies, Stephan

(57) **Abstract**

A graphic user interface for adaption of parameters to be used as a starting point for an automatic logo removal algorithm for removing a logo (4) within a picture or a sequence of pictures, wherein the algorithm comprises the steps of: defining a block (6, 17) inside a picture, the block (6, 17) comprising at least a portion of the logo (4), defining a search area (8, 20, 24) surrounding the block (6, 17), wherein the search area (8, 20, 24) is defining a search window within the picture or within a temporarily preceding or subsequent picture, and searching a best match for the block (6, 17) inside the search area (8, 20, 24) for determination of a replacement source block (10) or for determination of a motion estimate between subsequent pictures, wherein the source block (10) or the motion estimate provide a basis for the automatic logo removal algorithm, and wherein the graphic user interface provides a graphic overlay visualization of the block (6, 17), source block and/or the search area (8, 20, 24) and provides a user controlled adaption of parameters to be used as a starting point for the automatic logo removal algorithm by allowing a user defined setting of the respective block (6, 17), source block (10) and/or search area (8, 20, 24).

## Description

### FIELD OF THE INVENTION

The invention relates to a graphic user interface for adaption of parameters to be used as a starting point for an automatic logo removal algorithm for removing a logo within a picture or a sequence of pictures. Further, the invention relates to a method for adaption of parameters to be used as a starting point for such an automatic logo removal algorithm.

### BACKGROUND

Logos in images or in an image sequence, e.g. a movie or TV production, are frequently used by the creator of the respective image material to claim his or her authorship and intellectual property rights. However, if the image material shall be reused, especially if a new logo shall be placed to the respective image material, the primary logo has to be removed from the image or the image sequence. Otherwise, the quality of the image material would be diminished due to the presence/visibility of a plurality of logos.

Software like e.g. VirtualDub or AviSynth provide several filters and tools for automatic logo removal. However, there are several basic parameters that have to be tuned before launching the removal algorithm. Sometimes, these algorithms lead to an unpleasant result. The output image or image sequence either comprises still parts or fragments of the logo or unpleasant artifacts remain at the previous position of the logo. The return of the logo removal algorithm depends on the underlying image material and on the parameters that have been used as starting values for the automatic logo removal algorithm. By manual logo removal, better results can be reached, however, this requires additional operator time.

### SUMMARY

It is an object of the invention to provide a graphic user interface for adaption of parameters to be used as a starting point for an automatic logo removal algorithm and a method for adapting these parameters, wherein the graphic user interface and the method shall provide a user friendly an efficient option for selection of user-defined start parameters for the automatic logo removal algorithm.

In one aspect of the invention, a graphic user interface for adaption of parameters to be used as a starting point for an automatic logo removal algorithm is provided. The logo removal algorithm allows removing a logo within a picture or a sequence of pictures, and the algorithm comprises the steps of: defining a block inside a picture, the block comprising at least a portion of the logo and defining a search area surrounding the block, wherein the search area is defining a search window within the picture or within a temporarily preceding or subsequent picture. The algorithm further comprises the step of: searching a best match for the block inside the search area for determination of a replacement source block or for determination of a motion estimate between subsequent pictures, wherein the source block or the motion estimate provide a basis for the automatic logo removal algorithm. The graphic user interface provides a graphic overlay visualization of the block, the source block and/or the search area and provides a user-controlled adaption of parameters to be used as a starting point for the automatic logo removal algorithm by allowing a user-defined setting of the respective block, source block and/or search area.

Advantageously, the logo removal may be performed in a semi-automatic way. The starting parameters for the automatic logo removal algorithm are provided by the graphic user interface or tool and are easy to interpret for the operator. In comparison to a fully automatic logo removal algorithm, better result are easy to achieve and - in comparison to a manual logo removal - operator time is waived. Parameters that are typically used by automatic logo removal algorithms, i.e. the block comprising at least a part of the logo, a source block and/or the search area are visualized to an operator. Preferably, they are displayed as colored frames in the respective picture or sequence of pictures. The operator may quickly interpret these areas and has the advantageous possibility to adapt the parameters comfortably, e.g. by a drag and drop operation. The operator may click to one of the borders of the block or search area and alter the size or shape of the limits. This allows improving the start parameters of the automatic logo removal algorithm and thereby leads to significantly better results in the cleaned picture or sequence of pictures. Images without or at least with reduced artifacts are provided by help of the graphic user interface allowing a content layer optimization. This is not only less time-consuming than a fully manual logo removal but also more efficient and more comfortable for the operator in comparison to the standard tuning of numeric parameters which are often difficult to interpret.

According to an embodiment of the invention, the block is a target block comprising a portion of the logo, the search area is a spatial search area within the picture. The spatial search area is searched for a best match of the target block for determination of a replacement source block for spatial filling of at least a portion of the logo that is a part of the target block. Advantageously, the parameters for spatial filling (also known as intra-frame filling) may be adapted or set by help of the graphic user interface.

According to another advantageous embodiment of the invention, the search area is a temporal search area within the temporarily preceding or subsequent picture. A best match for the target block is sought inside the temporal search area for determination of a replacement source block for temporal filling of a portion of the logo that is a part of the target block. Advantageously, the graphic user interface may be applied for finding, setting or optimizing the starting parameters for a logo removal algorithm using temporal filling (also known as inter-frame filling).

In another advantageous aspect, the block is a basic block comprising the logo, the search area is a temporal search area inside a temporally preceding or subsequent picture and the temporal search area is searched for a best match for the basic block for determination of a motion estimate used as a basis for spatial temporal replacement of at least a portion of the logo.

In another aspect, the algorithm comprises: defining a basic block inside the picture comprising the logo, defining a temporal search area surrounding the block, wherein the temporal search area is defining a search window within a temporarily preceding or subsequent picture. Further, a target block that is located inside the picture is defined, wherein the target block comprises a part of the logo. Further, a spatial search area within the picture is defined. The spatial search area defines a search area for determination of a source block for replacement of the target block. The algorithm searches a best match for the basic block inside the temporal search area for determination of a motion estimate for spatiotemporal replacement of at least a portion of the logo and further searches a best match for the target block inside the spatial search area for determination of a replacement block of the logo. In an aspect, the temporal search area and the spatial search area may be combined so as to form a spatiotemporal search area. In such a case, both the temporal search for determination of a motion estimate and the spatial search are performed using the spatiotemporal search area. The graphic user interface according to the aspect of the invention provides a graphic overlay visualization of the basic block, the spatial and temporal or the spatiotemporal search area and/or the target block. The graphic user interface further allows user-controlled adaption of parameters to be used as a starting point for the automatic logo removal algorithm by allowing a user-defined setting of the respective blocks or/and search areas. Advantageously, a full spatiotemporal logo removal algorithm may be controlled and set-up by the graphical user interface according to the aspect of the invention.

According to an advantageous embodiment, the block, source block and/or search area has a user-defined shape, preferably a polygon shape. Typically, automatic logo removal algorithms use rectangular blocks as target replacement and search blocks. However, especially for the search blocks there may be objects inside the respective search area that may disturb the logo removal algorithm. This may be due to these objects having a different texture than the background or object that is occluded by the respective logo. By providing a user-controlled arbitrarily shaped search area the operator may exclude disturbing objects from the search area and thereby improves the quality of the results of the logo removal algorithm.

According to another embodiment of the invention, the automatic logo removal algorithm further comprises a banner detection algorithm, wherein the banner extends over a banner area of the picture and wherein the banner area is excluded from the respective block or search area. A banner is a typical overlay graphic that is not corresponding to the content of the rest of the frame, i.e. displayed objects. The respective part of the picture that is occluded by the logo may hardly be found inside a banner area and accordingly, if a banner or a part of the banner is included in the search area this will lead to unpleasant results of the logo removal algorithm. Accordingly, the banner is excluded from the search area.

In another aspect of the invention, a method for adaption of parameters to be used as a starting point for an automatic logo removal algorithm is provided. The algorithm allows removing a logo within a picture or a sequence of pictures, wherein the method comprises the steps of: defining a block inside a picture, the block comprising at least a portion of the logo, defining a search area surrounding the block, wherein the search area is defining a search window within the picture or within a temporarily preceding or subsequent picture. The method further comprises the steps of: searching a best match for the block inside the search area for determination of a replacement source block or for determination of a motion estimate between subsequent pictures, wherein the source block or the motion estimate provide a basis for the automatic logo removal algorithm. Further, the method according to the invention provides a graphic overlay visualization of the block, source block and/or the search area and allows a user-controlled adaption thereof. Parameters to be used as a starting point for an automatic logo removal algorithm may be set user-defined by help of a graphic definition of the respective block or search area.

Same or similar advantages already mentioned for the graphic user interface according to the invention apply to the method according to the invention.

### BRIEF DESCRIPTION OF DRAWINGS

Further aspects of the invention will ensue from the following description of an example embodiment of the invention with reference to the accompanying drawings, wherein
FIG.1 is an exemplary series of frames illustrating a temporal filling algorithm,
FIG. 2 is a further series of frames illustrating a spatial filling algorithm, and
FIG. 3 is a further sequence of frames illustrating spatiotemporal filling wherein search frames and blocks are provided inside the frame by a graphic user interface according to an embodiment of the invention,
FIG. 4 is another series of frames illustrating temporal filling while using a graphical user interface according to an embodiment of the invention, and
FIG. 5 is another series of frames illustrating a user-controlled adaption of search areas using a graphical user interface according to an embodiment of the invention.

### DETAILED DESCRIPTION OF AN EXAMPLE EMBODIMENT

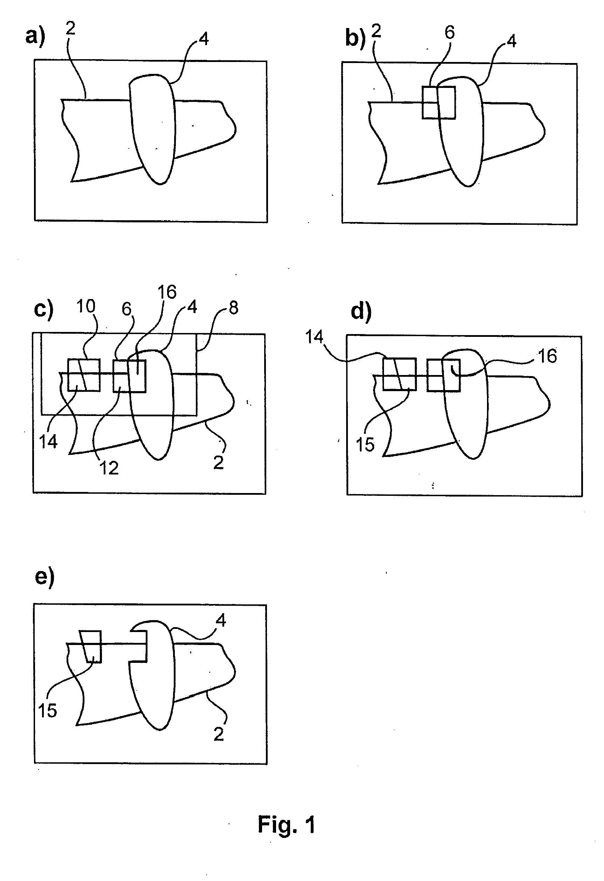

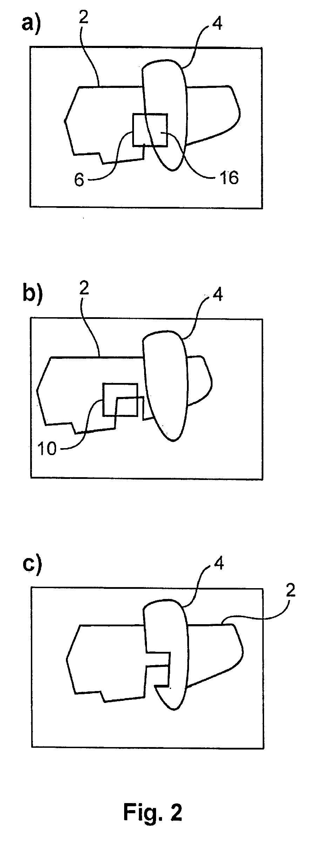

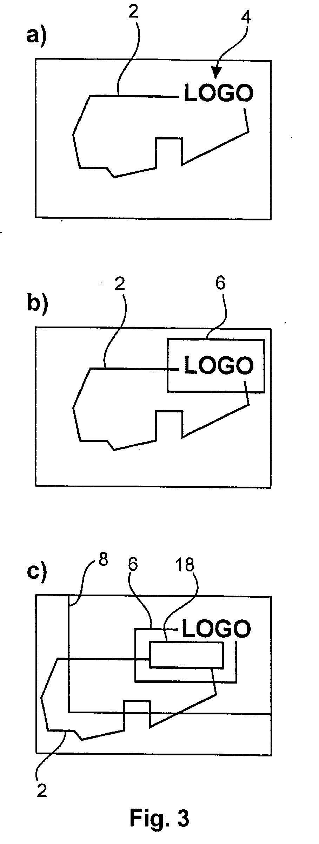

Existing logo removal algorithms like VirtualDub by MSU or AviSynth filters have several basic parameters that have to be set or tuned before launching the removal procedure. In the following spatial or intra-frame filling (FIG. 1), temporal or inter-frame filling (FIG. 2) and spatiotemporal filling (FIG. 3) will be explained by making reference to the respective figures. The description will refer to several several blocks and search areas and according to the embodiment, some or even all of the blocks and search areas will be displayed in the respective frames via a graphic user interface to a user or operator. This allows a fast an easy interpretation of the respective areas while taking into account the frame content.

FIG. 1 illustrates the principle of an intra-frame or spatial filling approach. The space that is occupied by a logo or another further object that is desired to be removed is progressively filled with other parts of the frame or picture by using available neighborhood information. A "logo" within the meaning of the term is e.g. a logo or sign of a TV-station or company typically known from pictures or TV-productions.

A first frame a) of FIG. 1 shows an exemplary frame comprising an object 2 and a logo 4 that is to be removed. In a first step that is illustrated in frame b), a target block 6 of typically m x n pixels is selected, wherein the target block 6 is overlapping the boundary line between the object 2 and the logo 4 to be removed. By performing a search in a search area 8 that is depicted in frame c) and has a size of M x N pixels, a source block 10 is determined by minimizing the sum of square differences between the pixel values in the known part 12 of the target block 6 (the left part in FIG. 1) and the respective pixels values in the source block 10. In FIG. 1 this is the left part 14 of the source block 10. Now, it is assumed that the other half 15 of the source block 10 (the right part of it) is suitable to replace the unknown part 16 in the target block 6 (see frame d)) and accordingly a segment of the logo 4 to be removed is replaced by said part (see frame d)).

FIG. 2 illustrates an example for a temporal or intra-frame filling procedure that is in principle similar to the spatial filling illustrated in FIG. 1. However, the best matching source block 10 is not sought inside the current frame but in a frame that is temporarily before or after the frame in question. Frame a) illustrates an object 2, a logo 4 that is to be removed and a target block 6. Frame b) is a temporarily later frame. The object 2 has moved inside the frame and accordingly the logo 4 overlaps with a different part of the object 2. The previously unknown part 16 of the target block 6 is now visible and a suitable source block 10 may be determined. The respective part of the logo 4 that is to be removed may subsequently be replaced in the original frame (frame a)) as it is shown in frame c). For determination of the source block 10, a motion estimate between subsequent frames, e.g. between frame a) and frame b), is determined. Actual information missing in a current frame may be visible in another frame e.g. if the background and the object 2 are not moving similar. Moreover, especially for object or logo removal in video sequences, there is a strong correlation between successive fillings and the visual quality of the filling results is pretty satisfying for temporarily consistent filling.

FIG. 3 illustrates a spatiotemporal filling procedure. The constraints of fast processing and high visual quality of the reconstruction led to the development of the spatiotemporal filling scheme. The frames of a sequence are reconstructed successively in chronological order. The reconstruction of a given frame is done thanks to the previously repaired frame. Temporal filling is based on a motion estimate between subsequent frames. A motion vector is estimated for a current frame having e.g. a runtime T1 (e.g. frame a) and b)). A subsequent frame e.g. frame c) at T2 = T1 + 1 is then re-used for filling the frame at T1 by using the inverse motion vector. Spatiotemporal filling comprises temporal filling (using the previous and repaired frame) and further spatial filling using information from a search block or area 8 surrounding the logo and containing background pixels. Frame a) in FIG. 3 illustrates an exemplary object 2 and a logo 4 that is desired to be removed. First, a basic block 17 surrounding the logo 4 is defined (see frame b)). There are surrounding parts in the basic block 17 that are not occluded by the logo 4 itself and that will be used for calculating a matching between these respective pixels and pixels in a source block 10 (not exemplarily shown in FIG. 3 for clarity reasons). Frame c) shows a temporarily later frame and obviously, the object 2 has moved. In the temporal step of the spatiotemporal filling procedure, a motion estimate vector between the previous position of the logo, indicated by a logo-rectangle 18 and the current position of the logo is determined. Accordingly, the previously occluded areas may be filled up with information that is now available. Further, according to the spatial part of the spatiotemporal filling procedure, a best match for the target block 6 is sought inside a search area 8 of the original frame depicted as frame a) or b).

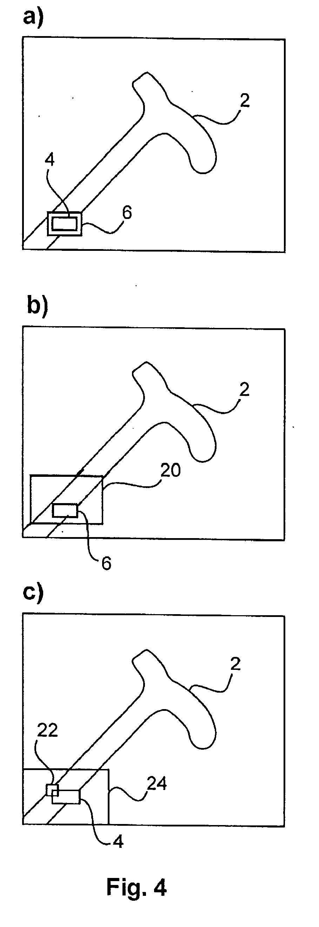

FIG. 4 illustrates a more practical example for a spatiotemporal filling procedure. The frame comprises an object 2 having a position that is slightly varying over time (see frame a) and b)). The depicted frames not only show the frame content but also several blocks and search areas, e.g. as colored or highlighted rectangles that are provided by the graphic user interface according to an embodiment of the invention. A basic block 17 is displayed and may be adjusted by an operator so as to surround a logo 4, e.g. an undesired object that is to be removed such as a logo of a TV station. The basic block 17 is used to identify a similar region in a next frame in the spatio-temporal filling step. For determination of a motion vector estimate, a first temporal search window 20 may be defined (see frame B), e.g. by a click and drop operation. The operator may adjust the temporal search window 20 while taking into account the image content. In a subsequent spatial filling step, a target block 6 overlapping at least partly the logo 4 is defined and a spatial search area 24 is defined for finding the best match for the target block 6. The target block 6 and the spatial search area 24 may be user defined too (see frame c)). As a result, the undesired logo 4 that is partly overlapping an object 2 that is visible in the frames a) to c) may be filled successively by finding matches for the target block 6. According to an embodiment of the invention, the blocks and search areas 4, 6, 17, 20 and 24 are preferably depicted as colored rectangles on a user's screen. The regions may be simply defined by drag-and-drop operations and may be adapted in size by the user.

Existing systems solely allow a numeric access to the start variables of the logo removal algorithm and these variables are typically hard to interpret. This drawback is overcome by the graphical user interface according to embodiments of the invention. By enlarging or limiting the respective search areas or blocks, the results of the logo removal algorithm may be modified by the user. In practice, such a modification may be done iteratively, i.e.: modify the start values, run the logo removal algorithm, check the result and if not satisfying: modify the start parameters again. Because there is a direct graphical visualization of the start parameters, the operator can easily understand the reasons for good or bad results of the logo removal algorithm.

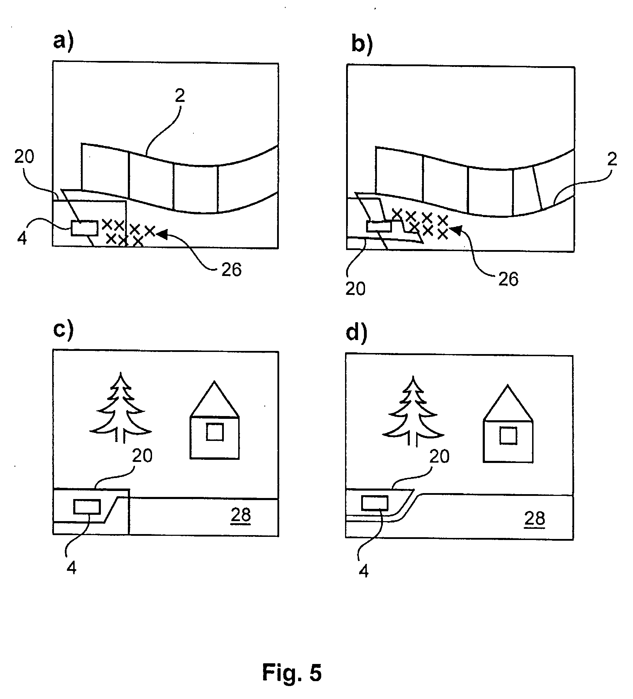

FIG. 5 illustrates further scenarios for logo removal. In frames a) and b) there is a complex object 2, e.g. a boat and an undesired logo 4. As illustrated in frame a), a standard search frame 25 would include several disturbing objects 26 e.g. a written name at the stern of a boat that would disturb the logo removal algorithm. According to an embodiment of the invention, the shape of the search area 8 may be adapted so as to not include the disturbing objects 26. A similar phenomenon may be observed in case a banner 28 is present in an image sequence (see frames c) and d)). A standard search frame 22 (frame c)) would include a part of the banner 28 and therefore the undesired logo 4 would probably not be removed accurately. According to an embodiment, the search area 8 is adapted so as to not include parts of the banner 28 (see frame d)).

Preferably a polygon line instead of a rectangle only is applied for defining a complex search area 8. The search areas 8 may be represented using transparent masks superimposed to the picture and a precise definition thereof, down to the pixel level if required, may be applied. Further, the search areas 8 - even if a rectangle is applied - do not necessarily need to be centered around the logo 4.

If the operator sees reconstruction artifacts he can preferably interrupt the system, ask for the display of the target and search areas and judge the reason for the bad filling results. This can be e.g. due to the search region containing another object than the one hidden by the logo. This object can disrupt the motion estimation for a spatial temporal filling. A search area that is too large leads to a waste of computation time, however restricting the search area without adaption to the content may prevent a good matching result. However, a large search area often contains objects that have no correlation with the area hidden by the logo but whose pieces are copied in the respective hidden area which leads to visible artifacts. This is a risk of the spatial filling algorithm but this risk can be limited by restricting the search area to desirable objects only.

Preferably, a banner detection may be included in the logo removal algorithm or may be added to the graphical user interface as a tool in order to exclude the banner from the search area 8. Accordingly, undesired parts of the banner 28 that are frequently inserted in common logo removal algorithms may be omitted. If the banner 28 is detected, the filling procedure is modified e.g. the previously described masks are reduced in order to omit the banner area and to avoid copying of banner parts. The banner detection may be automatic e.g. based on the assumption that the banner 28 is either black or white and that it is located at the bottom of the image. A banner mask may be obtained and can be used to modify the other masks used for filling, the latter are reduced if required to exclude pixels belonging to the banner. The banner detection can be semi-automatic, e.g. if the user indicates the presence of the banner by pushing a dedicated button. If the banner is not simply black or white the user can select a part of the banner as a reference to make its detection easier. Further, there may be cases where the logo is inserted in the banner and logo removal has to take into account the part of the banner only. In this case the search area 8 may be manually set to a respective representative area of the banner only.

Although the invention has been described hereinabove with reference to a specific embodiment, it is not limited to this embodiment and no doubt further alternatives will occur to the skilled person that lie within the scope of the invention as claimed.

### REFERENCE SIGNS

- 2: object
- 4: logo
- 6: target block
- 8: search area
- 10: replacement source block
- 12: known part of the target block
- 14: left part of the source block
- 15: other half of the source block
- 16: unknown part in the target block
- 17: basic block
- 18: logo-rectangle
- 20: temporal search area
- 22: further target block
- 24: spatial search area
- 25: standard search frame
- 26: disturbing objects
- 28: banner

## Claims

1. A graphic user interface for adaption of parameters to be used as a starting point for an automatic logo removal algorithm for removing a logo (4) within a picture or a sequence of pictures, wherein the algorithm comprises the steps of:
**a)** defining a block (6, 17) inside a picture, the block (6, 17) comprising at least a portion of the logo (4),
**b)** defining a search area (8, 20, 24) surrounding the block (6, 17), wherein the search area (8, 20, 24) is defining a search window within the picture or within a temporarily preceding or subsequent picture, and
**c)** searching a best match for the block (6, 17) inside the search area (8, 20, 24) for determination of a replacement source block (10) or for determination of a motion estimate between subsequent pictures, wherein the source block (10) or the motion estimate provide a basis for the automatic logo removal algorithm,
and wherein the graphic user interface provides a graphic overlay visualization of the block (6, 17), source block and/or the search area (8, 20, 24) and provides a user controlled adaption of parameters to be used as a starting point for the automatic logo removal algorithm by allowing a user defined setting of the respective block (6, 17), source block (10) and/or search area (8, 20, 24).

2. The graphic user interface according to claim 1, wherein the block (6, 17) is a target block (6) comprising a portion of the logo (4), the search area (8) is a spatial search area (24) within the picture and the best match for the target block (6) is sought inside the spatial search area (24) for determination of a replacement source block (10) for spatial filling of a portion of the logo (4) that is a part of the target block (6).

3. The graphic user interface according to claim 1, wherein the search area (8) is a temporal search area (20) within the temporarily preceding or subsequent picture, a best match for the target block (6) is sought inside the temporal search area (20) for determination of a replacement source block (10) for temporal filling of a portion of the logo (4) that is a part of the target block (6).

4. The graphic user interface according to claim 1, wherein the block (6, 17) is a basic block (17) comprising the logo (4), the search area (8) is a temporal search area (20) inside the temporarily preceding or subsequent picture and a best match for the basic block (17) is sought inside the temporal search area (20) for determination of the motion estimate used as a basis for spatiotemporal replacement of at least a portion of the logo (4).

5. The graphic user interface according to claim 1, wherein the algorithm comprises:
**a)** defining a basic block (17) inside the picture comprising the logo (4),
**b)** defining a temporal search area (20) surrounding the basic block (17), wherein the temporal search area (20) is defining a search window within a temporarily preceding or subsequent picture,
**c)** defining a target block (6) inside the picture comprising a part of the logo (4) and
**d)** defining a spatial search area (24) within the picture defining a search area for determination of a source block (10) for the replacement of the target block (6),
**e)** searching a best match for the basic block (17) inside the temporal search area (20) for determination of a motion estimate for spatiotemporal replacement of at least a portion of the logo (4) and
**f)** searching a best match for the target block (6) for determination of a replacement source block (10) of the logo (4),
wherein the the graphic user interface provides a graphical overlay visualization of the basic block (17), the temporal search area (20), the target block (6) and the spatial search area (24) and provides a user controlled adaption of parameters to be used as a starting point for the automatic logo removal algorithm by allowing a user defined setting of the respective blocks (6, 17) and search areas (20, 24).

6. The graphic user interface according to one of the preceding claims, wherein the block (6, 17), source block (10) and/or search area (8, 20, 24) has a user defined shape, preferably a polygon shape.

7. The graphic user interface according to one of the preceding claims, wherein the automatic logo removal algorithm further comprises a banner detection algorithm, the banner (28) extending over a banner-area of the picture, and wherein the banner area is excluded from the respective block (6, ?) or search area (8, 20, 24).

8. A method for adaption of parameters to be used as a starting point for an automatic logo removal algorithm for removing a logo (4) within a picture or a sequence of pictures, the method comprising the steps of:
**a)** defining a block (6, 17) inside a picture, the block (6, 17) comprising at least a portion of the logo,
**b)** defining a search area (8, 20, 24) surrounding the block (6, 17), wherein the search area (8, 20, 24) is defining a search window within the picture or within a temporarily preceding or subsequent picture, and
**c)** searching a best match for the block (6, 17) inside the search area (8, 20, 24) for determination of a replacement source block (10) or for determination of a motion estimate between subsequent pictures, wherein the source block (10) or the motion estimate provide a basis for the automatic logo removal algorithm,
**d)** providing a graphic overlay visualization of the block (6, 17), source block (10) and/or the search area (8, 20, 24) for a user controlled adaption of parameters to be used as a starting point for an automatic logo removal by allowing a user defined setting of the respective block (6, 17), source block and/or search area (8, 20, 24).
